# EUROPÄISCHE PATENTSCHRIFT

(11) **EP 3 862 780 B1**
(45) Veröffentlichungstag und Bekanntmachung des Hinweises auf die Patenterteilung: **29.12.2021**
(21) Anmeldenummer: 20156075.2
(22) Anmeldetag: 07.02.2020
(51) Int. Cl.: G01S 7/481, G01S 17/42, G01S 7/486, G01S 7/497

(54) **SICHERHEITSLASERSCANNER UND VERFAHREN ZUR FRONTSCHEIBENÜBERWACHUNG**
SAFETY LASER SCANNER AND METHOD FOR FRONT SCREEN MONITORING
BALAYEUR LASER DE SÉCURITÉ ET PROCÉDÉ DE SURVEILLANCE DE VITRE FRONTALE

(43) Veröffentlichungstag der Anmeldung: 11.08.2021
(73) Patentinhaber: SICK AG, 79183 Waldkirch (DE)
(72) Erfinder: Krämer, Joachim, 79189 Bad Krozingen (DE); Hammes, Markus, 79117 Freiburg (DE); Geisemeyer, Ino, 79102 Freiburg (DE)

(56) Entgegenhaltungen:
- EP-A1- 2 642 314
- EP-B1- 2 482 094

## Beschreibung

Die Erfindung betrifft einen Sicherheitslaserscanner und ein Verfahren zur Frontscheibenüberwachung nach dem Oberbegriff von Anspruch 1 beziehungsweise 14.

Für optische Überwachungen werden häufig Laserscanner eingesetzt. Darin überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Dabei sind zwei grundsätzliche Prinzipien bekannt, die Lichtlaufzeit zu bestimmen. Bei phasenbasierten Verfahren wird das Sendelicht moduliert und die Phasenverschiebung des empfangenen gegenüber dem gesendeten Licht ausgewertet. Bei pulsbasierten Verfahren, wie sie in der Sicherheitstechnik bevorzugt eingesetzt werden, misst der Laserscanner die Laufzeit, bis ein ausgesandter Lichtpuls wieder empfangen wird.

Ein Sicherheitslaserscanner, also ein für die Sicherheitstechnik ausgebildeter Laserscanner, hat die Aufgabe, eine Gefahrenquelle abzusichern und Unfälle vor allem mit Personen zu vermeiden. Der Laserscanner überwacht dabei ein Schutzfeld, das während des Betriebs der Maschine von Bedienpersonal nicht betreten werden darf. Da der Laserscanner Winkel- und Entfernungsinformationen gewinnt, können zweidimensionale Positionen von Objekten in dem Überwachungsbereich und damit auch in dem Schutzfeld ermittelt werden. Erkennt der Laserscanner einen unzulässigen Schutzfeldeingriff, etwa ein Bein einer Bedienperson, so löst er einen Not-Halt der Maschine aus.

In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie beispielsweise sichere elektronische Auswertung durch redundante, diversitäre Elektronik, Funktionsüberwachung und/oder Vorsehen von einzelnen Testzielen mit definierten Reflexionsgraden, die unter den entsprechenden Scanwinkeln erkannt werden müssen.

Eine weitere dieser Sicherheitsanforderung ist die Erkennung einer Beeinträchtigung der Transmission einer Frontscheibe des Laserscanners, auf die bei Einschränkung der Detektionsfähigkeit mit einer sicherheitsgerichteten Abschaltung reagiert werden muss. Dabei ist sowohl eine homogene Verschmutzung, etwa durch Staub, als auch eine punktuelle Beeinträchtigung durch kleine Störobjekte ab einer festgelegten Mindestgröße aufzudecken. Ebenfalls auszuschließen ist eine bewusste Manipulation durch Abdeckung von Frontscheibenbereichen mit kleinen Abschattungsobjekten.

Zur Aufdeckung solcher Störeinflüsse verwendet ein Laserscanner üblicherweise optische Testkanäle, die verschiedene Positionen des Frontscheibenbereichs mittels Durchstrahlung prüfen. In einer beispielsweise aus der DE 43 45 446 C2 bekannten Lösung werden über den gesamten Winkelbereich der Frontscheibe eine Vielzahl unabhängiger optischer Testkanäle verteilt, die entsprechend unterschiedliche Bereiche der Frontscheibe testweise durchstrahlen und dadurch eine beeinträchtigte Transmission erkennen. Die Verteilung der Testkanäle muss dicht genug sein, um trotz nur punktueller Detektion die von der Norm geforderten kleinen Verschmutzungs- oder Manipulationsobjekte überall sicher zu detektieren. Eine große Zahl von Testkanälen erhöht natürlich die Herstellkosten und den benötigten Bauraum. Außerdem liegen die Testkanäle recht nahe an der Außenkontur des Laserscanners, um der drehenden Ablenkeinheit auszuweichen. Damit werden sie anfällig für Störungen durch Fremdlicht und zufällig oder zur Manipulation in der Nähe befindliche Reflektoren.

Bei Laserscannern mit biaxialem Aufbau, also nebeneinander verlaufendem Sende- und Empfangslichtstrahl, sind lokale Verschmutzungen oder Manipulationen problematischer als bei koaxialem Aufbau. Solche Verdeckungen von Teilen des Empfangsstrahlengangs reduzieren das Empfangssignal und können zu einem Detektionsverlust führen. Zur Normerfüllung wird dies durch verschiedene Prüfflecken simuliert und getestet.

Bei koaxialem Aufbau besteht das Problem längst nicht im selben Ausmaß, da entweder nur ein kleiner Teil des Empfangsstrahlengangs betroffen ist, was keine Ausfälle verursacht, oder auch der Sendestrahl blockiert wird und dies erkannt würde. Aus diesem Grund benötigt ein biaxial aufgebauter Laserscanner besonders viele Testkanäle.

Die EP 2 237 065 A1 offenbart einen Laserscanner, bei dem sich die komplette Messeinheit mit Lichtquelle und Detektor dreht. Auf dem entsprechenden Rotor sind außerdem eine Testlichtquelle und ein Testdetektor untergebracht, während außerhalb des Gehäuses ein Reflektorelement angeordnet ist. So tasten Testlichtquelle und Testdetektor die Frontscheibe im Laufe der Umdrehung mit Hilfe des Reflektorelements ab. Da der Testlichtdetektor zwangsläufig nach außen gerichtet ist, wird er relativ leicht durch Fremdlicht gestört.

In der DE 10 2015 105 264 A1 werden Testkanäle durch die Frontscheibe über einen mit dem Drehspiegel mitbewegten Reflektor geführt. Abschließend diskutiert die DE 10 2015 105 264 A1 verschiedene Konzepte zum Prüfen der Transmissionsfähigkeit. Dabei wird als eine Möglichkeit angeführt, einen Teil des eigentlichen Scanstrahls abzuzweigen. Dieser Ansatz wird aber als nachteilig angesehen, da ein Übersprechen in den eigentlichen Messkanal zu befürchten ist.

Bei einem Laserscanner nach der DE 20 2013 102 440 U1 basiert die Verschmutzungsmessung auf Testkanälen, die reflexiv statt transmissiv messen. Das reduziert aber weder den Aufwand für einen einzelnen Testkanal, noch verringert sich dadurch die Anzahl erforderlicher Testkanäle.

Aus der EP 2 482 094 B1 ist ein Laserscanner bekannt, der einen Reflex an der Innenseite der Frontscheibe auswertet. Dies geschieht allerdings in einem rückwärtigen Totbereich an einem eigens verspiegelten Abschnitt der Frontscheibe für eine Prüfung der Funktionsfähigkeit des Messsystems. Die Transmission der Frontscheibe könnte wegen der Verspiegelung gar nicht bewertet werden, und außerdem ist es die Lichtdurchlässigkeit im Sichtfeld und nicht im Totbereich, die gewährleistet werden müsste.

Die EP 2 642 314 A1 spannt Testlichtpfade durch außen um die Frontscheibe angeordnete Testlichtsender auf, deren Testlicht dann nach mehrfacher Umlenkung an der Frontscheibe und weiteren Reflektoren im Lichtempfänger des Hauptmesssystems empfangen werden. Das spart zwar Testlichtempfänger ein, ist aber weiterhin das Grundprinzip der um die Frontscheibe verteilten Testkanäle.

Aus der EP 2 927 711 A1 ist bekannt, mit einem Testlichtsender die Funktionsfähigkeit des Messystems zu prüfen. In einer Ausführungsform verläuft dessen Testlichtpfad über eine Reflexion an der Frontscheibe. Es wird erwähnt, dass dies in Doppelfunktion für eine Überprüfung der Frontscheibe auf Verunreinigungen genutzt werden könnte. Da jedoch der Testlichtsender nur punktuell bei einem einzigen Scanwinkel vorgesehen ist, wäre die Frontscheibe so nicht sinnvoll prüfbar, und jedenfalls würde für jeden zu prüfenden Abschnitt der Frontscheibe ein zusätzlicher Testlichtsender benötigt, so dass der Hardwareaufwand für die Testkanäle immer noch erheblich wäre.

Es ist daher Aufgabe der Erfindung, die Überwachung der Frontscheibe eines Sicherheitslaserscanners zu verbessern.

Diese Aufgabe wird durch einen Sicherheitslaserscanner und ein Verfahren zur Frontscheibenüberwachung nach Anspruch 1 beziehungsweise 15 gelöst. Der Laserscanner ist ein Sicherheitsscanner, demnach im Personenschutz zur Vermeidung von Unfällen einsetzbar, insbesondere an Maschinen im industriellen Umfeld oder an autonomen Fahrzeugen. Dafür sind Maßnahmen umgesetzt, die den Sicherheitslaserscanner vor Ausfällen schützen beziehungsweise Fehler aufdecken, um rechtzeitig eine sicherheitsgerichtete Reaktion einleiten zu können, wenn eine Gefahr erkannt wird oder der Sicherheitslaserscanner seine Funktion nicht gewährleisten kann. Diese Maßnahmen sind für spezifizierte Sicherheitsniveaus in entsprechenden Sicherheitsnormen für Maschinensicherheit oder berührungslos wirkende Schutzeinrichtungen festgelegt, von denen einleitend einige genannt sind. Die Frontscheibenüberwachung ist eine dieser Maßnahmen. Ein Lichtsender sendet einen Abtaststrahl aus, der mit Hilfe einer beweglichen Ablenkeinheit den Überwachungsbereich periodisch abtastet, und ein Lichtempfänger erzeugt aus dem nach Remission oder Reflexion an einem Objekt zurückkehrenden Abtaststrahl ein Empfangssignal. Diese Komponenten sind Kern eines Hauptmesssystems des Laserscanners. Als Ablenkeinheit ist vorzugsweise ein Drehspiegel vorgesehen, oder das Hauptmesssystem ist insgesamt in einem drehenden Messkopf untergebracht.

Eine Steuer- und Auswertungseinheit wertet das Empfangssignal des Lichtempfängers aus, um Informationen über die angetasteten Objekte zu gewinnen, insbesondere mit einem Lichtlaufzeitverfahren deren Abstände zu messen. Außerdem wird ein Frontscheibenreflexstrahl bewertet, der durch Reflexion des Abtaststrahls innen an der Frontscheibe entsteht. Die Frontscheibenüberwachung auf deren ausreichende Lichtdurchlässigkeit basiert folglich auf dem Lichtsender des Hauptmesssystems.

Die Erfindung geht von dem Grundgedanken aus, den Frontscheibenreflexstrahl, der zwangsläufig am Durchtrittspunkt des Abtaststrahls entsteht, auf einen weiteren zu testenden Bereich der Frontscheibe zu führen. Dort wird der Frontscheibenreflexstrahl ein weiteres Mal reflektiert, es entsteht ein zweifach reflektierter Frontscheibenreflexstrahl. Für diese Strahlführung ist mindestens ein Lichtumlenkelement, wie ein Spiegel oder Prisma, in dem Strahlengang des Frontscheibenreflexstrahls angeordnet. Für die Bewertung der Lichtdurchlässigkeit der Frontscheibe wird der in dem weiteren zu testenden Bereich der Frontscheibe reflektierte und/oder transmittierte Anteil des Frontscheibenreflexstrahls herangezogen.

Die Erfindung hat den Vorteil, dass die einleitend genannten Nachteile vermieden werden und der Aufwand für eine Frontscheibenüberwachung verringert wird. Es sind je nach Ausführungsform keine oder jedenfalls weniger Testkanäle erforderlich. Herstellkosten, Komplexität und Baugröße werden verringert. Herkömmlich wird eine reflexive Frontscheibenüberwachung bei Sicherheitslaserscannern nicht genutzt, weil bisher dunkler Staub nicht ausreichend zuverlässig detektiert werden konnte, der aber durchaus einen Detektionsverlust verursachen kann. Erfindungsgemäß werden einfach und mit wenigen Bauteilen die von den Sicherheitsnormen geforderten Prüf- und Manipulationsflecken erkannt, die für Staubansammlungen mittlerer Remission und beispielsweise Manipulationsaufkleber repräsentativ sind, und soweit erforderlich wird dunkler Staub bereits durch wenige ergänzende Testkanäle erkannt.

Die Steuer- und Auswertungseinheit ist erfindungsgemäß dafür ausgebildet, für die Frontscheibenüberwachung das von dem zweifach reflektierten Frontscheibenreflexstrahl in dem Lichtempfänger erzeugte Empfangssignal auszuwerten. Hiermit wird der zweifach reflektierte Frontscheibenreflexstrahl in dem Hauptmesssystem ausgewertet, mit anderen Worten die Frontscheibenüberwachung in das Hauptmesssystem integriert. Außer dem passiven Lichtumlenkelement wird keine zusätzliche Hardware benötigt. Der Mehraufwand, um eine Frontscheibenüberwachung zu erhalten, beschränkt sich auf entsprechende Auswertungsfunktionalität der Steuer- und Auswertungseinheit.

Der Sicherheitslaserscanner weist bevorzugt mindestens einen externen Zusatzlichtempfänger auf, und auf den externen Zusatzlichtempfänger fällt ein den zu testenden Bereich transmittierender Anteil des Frontscheibenreflexstrahls, wobei die Steuer- und Auswertungseinheit dafür ausgebildet ist, für die Frontscheibenüberwachung das Empfangssignal des Zusatzlichtempfängers auszuwerten. Hier wird nun komplementär zu dem zweifach reflektierten Frontscheibenreflexstrahl der in dem weiteren zu testenden Bereich transmittierte Anteil des Frontscheibenreflexstrahls ausgewertet. Beides schließt einander nicht aus, es kann also auch sowohl der reflektierte als auch der transmittierte Anteil des auf den weiteren zu testenden Bereich auftreffenden Frontscheibenreflexstrahls ausgewertet werden.

Lichtsender und Lichtempfänger sind bevorzugt in einem biaxialen Aufbau nebeneinander mit zueinander parallelen optischen Achsen angeordnet. Herkömmlich wird stattdessen häufig ein koaxialer Aufbau gewählt, bei dem der Sendestrahl mit seinem geringeren Querschnitt zentral im Empfangsstrahl liegt. Eine biaxiale Anordnung ist aber gerade bei sehr kleiner Bauweise einfacher. Die erfindungsgemäße Frontscheibenüberwachung ist auch für die biaxiale Anordnung geeignet, für die herkömmlich eine besonders große Anzahl von Testkanälen vonnöten wäre.

Der Sicherheitslaserscanner weist bevorzugt zur zusätzlichen Frontscheibenüberwachung zumindest ein Paar Testlichtsender und Testlichtempfänger auf, die nach Art einer Einweglichtschranke oder Reflexionslichtschranke angeordnet sind, um einen Teilbereich der Frontscheibe mit einer Transmissionsmessung auf Lichtdurchlässigkeit zu prüfen. Das entspricht den herkömmlichen Testkanälen nach dem Prinzip der Einweg- oder Reflexionslichtschranke. Letzteres hat den Vorteil, dass innen ein baukleiner Reflektor ohne Anschlüsse ausreicht, während das zugehörige Testlichtsender- und Testlichtempfängerpärchen außen angeordnet werden kann. Die Kombination einer Frontscheibenüberwachung aus dem Frontscheibenreflexstrahl und herkömmlichen Testkanälen ist in der Lage, sämtliche zu detektierenden Beeinträchtigungen der Lichtdurchlässigkeit der Frontscheibe verlässlich zu erfassen, wobei im Vergleich zum Stand der Technik nur wenige Testkanäle erforderlich sind. Das liegt daran, dass zumindest der Teil der Szenarien, der besonders dichte Testkanäle erfordern würde, von der Auswertung des Frontscheibenreflexstrahls übernommen wird.

Das Lichtumlenkelement ist vorzugsweise nur in mindestens einem Teilbereich eines Sichtfeldes des Sicherheitslaserscanners vorgesehen, so dass die auf dem Frontscheibenreflexstrahl basierende Frontscheibenüberwachung nur den Teilbereich betrifft. Das Sichtfeld (FOV, Field of View) ist bei einem Laserscanner durch einen Scanwinkelbereich angegeben, der beispielsweise 180°, 270° oder bis zu 360° umfasst. Die auf Auswertung des Frontscheibenreflexstrahls basierende Frontscheibenüberwachung kann auf besonders kritische Teilbereiche beschränkt bleiben, wobei es auch mehrere solche Teilbereiche oder Winkelintervalle geben kann. Das verbleibende Sichtfeld wird beispielsweise durch herkömmliche Testkanäle abgedeckt. Aufgabe der Testkanäle kann beispielsweise die Detektion einer homogenen Verschmutzung mit dunklem Staub sein. Wegen der Annahme einer homogenen Verteilung dürfen diese Testkanäle Überwachungslücken lassen, oder anders ausgedrückt Frontscheibenbereiche stichprobenartig testen. Beispielsweise fordern die Sicherheitsnormen, ein 45°-Segment einer Dämpfungsfolie zu erkennen, so dass 270° bereits mit sechs Testkanälen abgedeckt sind. Die Erfassung von Prüfflecken, die eine lokale Verunreinigung oder Manipulation repräsentieren, muss dagegen lückenlos sein. Dafür würden dann beispielsweise zehn, sechzehn oder noch mehr Testkanäle gebraucht. Diese Prüfflecken sind aber nach den Sicherheitsnormen nicht dunkel, sondern haben ein Remissionsvermögen von 20%. Das wird durch Auswertung des Frontscheibenreflexstrahls gut erfasst, so dass die zusätzlichen Testkanäle entfallen können. Die beiden Komponenten der Frontscheibenüberwachung ergänzen einander daher wirkungsvoll und erlauben es, die Gesamtzahl erforderlicher Testkanäle erheblich zu reduzieren. Es sei noch erwähnt, dass es nie erforderlich ist, die gesamte Frontscheibe zu überwachen, sondern nur denjenigen Teil, in dem tatsächlich der Abtaststrahl ein- oder austritt.

Der Teilbereich ist vorzugsweise ein Randbereich zwischen Sichtfeld und einem Totbereich jenseits des Sichtfeldes. Bisherige Sicherheitslaserscanner haben, auch wenn das prinzipiell denkbar wäre, keine 360°-Rundumsicht, sondern einen begrenzten Sichtwinkelbereich von beispielsweise 270° und sind damit gleichsam nach hinten blind. Dieser Winkelbereich, im Zahlenbeispiel von 270°-360°, wird als Totzone bezeichnet, denn dort werden keine Objekte detektiert. Es gibt zwei Randbereiche im Übergang vom Sichtwinkelbereich zur Totzone und von der Totzone zum Sichtwinkelbereich, beispielsweise bei 270° und bei 360°. Diese Randbereiche erfordern herkömmlich besonders viele Testkanäle, besonders bei einem biaxialen Aufbau des Sicherheitslaserscanners.

Das Lichtumlenkelement ist bevorzugt in dem Totbereich vorgesehen. Eine konkrete Anforderung der Sicherheitsnormen ist, einen Prüffleck mit einer bestimmten Mindestausdehnung zu erfassen. Wegen dieser endlichen Ausdehnung ist es denkbar, den Frontscheibenreflexstrahl in einem Scanwinkel auszuwerten, der in der Totzone liegt, also beispielsweise bei 275°, der dann sozusagen rückwirkend den Randbereich bis 270° austestet, und entsprechend bei 355° den Randbereich ab 0°.

Die Steuer- und Auswertungseinheit ist bevorzugt dafür ausgebildet, die Empfindlichkeit der Erfassung des zweifach reflektierten Frontscheibenreflexstrahls in dem Lichtempfänger und/oder die Auswertung des dadurch erzeugten Empfangssignals im Randbereich anzupassen. Wenn die Frontscheibenüberwachung auf Basis des Frontscheibenreflexstrahls im Randbereich und insbesondere schon in der Totzone stattfindet, wo das Hauptmesssystem nicht benötigt wird, ist eine Anpassung allein an die Bedürfnisse der Frontscheibenüberwachung möglich. In Scanwinkeln innerhalb des Sichtbereichs sind die Anforderungen der Objekterkennung und der Frontscheibenüberwachung oft konträr, und die Objekterkennung bestimmt die Auslesung beispielsweise der Empfindlichkeit. Vorzugsweise wird die Empfindlichkeit für die Frontscheibenüberwachung so eingestellt, dass Verunreinigungen verlässlich, aber nicht zu sensibel erfasst werden. Die Empfindlichkeit lässt sich beispielsweise über die Ausgangsleistung des Lichtsenders, eine Verstärkung des Lichtempfängers oder Schwellen in der Auswertung des Empfangssignals steuern.

Die Frontscheibe weist bevorzugt die Form eines Rotationskörpers und im Schnitt eine gekrümmte Kontur auf. Beispiele für diese Form der Frontscheibe sind ein Kegelstumpf oder ein Kugelausschnitt, oder vorzugsweise ein Kelch mit einer kelchförmig gekrümmten Kontur, deren Krümmung von unten nach oben abnimmt. Die Krümmung sorgt dafür, dass der Frontscheibenreflex nicht direkt in den Lichtempfänger zurückgespiegelt wird und diesen blendet. Durch die zweite Reflexion im Weiteren zu testenden Bereich wird der Frontscheibenreflexstrahl nochmals ganz erheblich geschwächt. Der Rotationskörper muss nicht die vollen 360° umfassen, sondern nur das Sichtfeld von beispielsweise 270°, wobei auch bei Sichtfeldern kleine 360° aus konstruktiven Gründen ein vollständiger Rotationskörper denkbar ist, ebenso aber auch eine andere Form, beispielsweise eine flache Bauform im Bereich einer Totzone.

Der Sicherheitslaserscanner weist bevorzugt ein erstes und ein zweites Lichtumlenkelement im Strahlengang des Frontscheibenreflexstrahls auf, wobei insbesondere das erste Lichtumlenkelement an einem mittig angeordneten Motorhalter und das zweite Lichtumlenkelement an einem Deckel des Sicherheitslaserscanners angeordnet ist. Der Frontscheibenreflexstrahl wird also zweimal umgelenkt, ehe er auf den weiteren zu testenden Bereich der Frontscheibe fällt. Die Lichtumlenkelemente können als reflektierende Oberflächen insbesondere des Motorhalters oder Haubendeckels ausgebildet sein. Die Anzahl der Lichtumlenkelemente bezieht sich auf einen jeweiligen festen Scanwinkel, d.h. Lichtumlenkelemente im Strahlweg desselben Frontscheibenreflexstrahls. Es können auch insgesamt nur zwei Lichtumlenkelemente sein, die dann ringförmig, in Scanrichtung umlaufend ausgebildet sind, oder über die verschiedenen Scanwinkel mehrere Lichtumlenkelemente verteilt angeordnet sein.

Das Lichtumlenkelement ist bevorzugt strahlabschwächend ausgebildet. Dazu werden beispielsweise Schwärzungen vorgenommen. Zwar wird der Frontscheibenreflexstrahl bereits durch die Reflexionen an der Frontscheibe gegenüber dem Abtaststrahl deutlich abgeschwächt. Eine zusätzliche Abschwächung ist dennoch vorteilhaft, um eine angemessene Empfindlichkeit der Frontscheibenüberwachung einzustellen und unnötiges Streulicht im Sicherheitslaserscanner zu vermeiden. Wie schon ausgeführt, ist die Empfindlichkeit des Hauptmesssystems auf dessen Bedürfnisse ausgerichtet, außer gegebenenfalls in der Totzone, und deshalb für die Frontscheibenüberwachung keine steuerbare Größe. Falls der Frontscheibenreflexstrahl mehrfach von mehreren Lichtumlenkelementen umgelenkt wird, kann die Abschwächung in einem oder mehreren dieser Lichtumlenkelemente erfolgen.

Im Strahlengang des Frontscheibenreflexstrahls ist bevorzugt ein Referenzlichtempfänger angeordnet, insbesondere an einem Lichtumlenkelement. Damit kann die Messung des Frontscheibenreflexstrahls durch den Lichtempfänger oder einen externen zusätzlichen Lichtempfänger unterstützt oder zumindest in einigen Scanwinkeln auch ersetzt werden. Der Referenzlichtempfänger kann auch einem Test der Funktionsfähigkeit des Hauptmesssystems dienen, beispielsweise die Sendeleistung des Lichtsenders überwachen, oder es wird die Lichtlaufzeit bis zum Referenzlichtempfänger bestimmt.

In Umlaufrichtung der Bewegung der Ablenkeinheit ist bevorzugt teilweise ein Lichtumlenkelement und teilweise eine Lichtfalle angeordnet, um durch Vergleich der Empfangssignale eine differentielle Frontscheibenüberwachung zu ermöglichen. Die Anordnung ist insbesondere alternierend. Dadurch wird eine Differenzmessung möglich, die eine verlässlichere Unterscheidung eines nahen Objekts in dem Überwachungsbereich und eine Erfassung einer Frontscheibenverunreinigung ermöglicht. Somit werden die Messergebnisse im Nahbereich verbessert.

Der Sicherheitslaserscanner ist bevorzugt als Mehrlagenscanner mit mehreren in Elevation separierten Abtaststrahlen ausgebildet, wobei mindestens einer der Abtaststrahlen für die Frontscheibenüberwachung verwendet ist. Ein Mehrlagenscanner verwendet nicht nur einen, sondern mehrere Abtaststrahlen, und überwacht dementsprechend eine Vielzahl von Überwachungsebenen. Bei hinreichender Anzahl beziehungsweise Dichte der Abtaststrahlen genügt es, wenn die Frontscheibenüberwachung auf einem oder einigen dieser Abtaststrahlen basiert. Wenn die Überwachungslücke in Elevation hinnehmbar ist, kann sogar ein Abtaststrahl dediziert nur für die Frontscheibenüberwachung herangezogen werden.

Der Sicherheitslaserscanner weist bevorzugt einen sicheren Ausgang auf, dessen Steuer- und Auswertungseinheit dafür ausgebildet ist, die Position erfasster Objekte mit Schutzfeldern zu vergleichen und bei Erkennung eines unzulässigen Schutzfeldeingriffs den sicheren Ausgang mit einem Absicherungssignal anzusteuern. Die Schutzfeldüberwachung ist ein bewährtes Vorgehen, um Unfälle an gefahrbringenden Maschinen zu vermeiden. Wird ein unzulässiger Schutzfeldeingriff erkannt, so wird über einen sicheren Ausgang (OSSD, Output Signal Switching Device) eine sicherheitsgerichtete Reaktion einer mit dem Sicherheitslaserscanner überwachten Maschine eingeleitet, wobei möglicherweise noch eine Sicherheitssteuerung zwischengeschaltet ist, die das Absicherungssignal gegebenenfalls noch bewertet und unterdrückt.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Schnittdarstellung eines Sicherheitslaserscanners;
- Fig. 2: eine Schnittdarstellung einer Frontscheibenüberwachung eines Sicherheitslaserscanners durch Auswertung eines zweifach reflektierten Frontscheibenreflexstrahls;
- Fig. 3: eine schematische dreidimensionale Darstellung einer Frontscheibe mit dem Strahlverlauf gemäß Figur 2;
- Fig. 4: eine Schnittdarstellung einer Frontscheibenüberwachung, die komplementär zu der Situation der Figur 2 einen transmittierten Anteil eines Frontscheibenreflexstrahls auswertet;
- Fig. 5: eine Draufsicht auf Lichtumlenkungen für eine Frontscheibenüberwachung mit Testkanälen und mit Auswertung eines Frontscheibenreflexstrahls;
- Fig. 6: eine Darstellung einer aufgerollten Frontscheibe mit verschiedenen Zonen, in denen eine Frontscheibenüberwachung mit Testkanälen eine Verunreinigung erkennt und nicht erkennt;
- Fig. 7: eine vergrößerte Ansicht gemäß Figur 6 über einen kleineren Winkelbereich im Randbereich zu einer Totzone; und
- Fig. 8: eine Ansicht entsprechend Figur 7, nun mit zusätzlicher Frontscheibenüberwachung basierend auf dem Frontscheibenreflexstrahl.

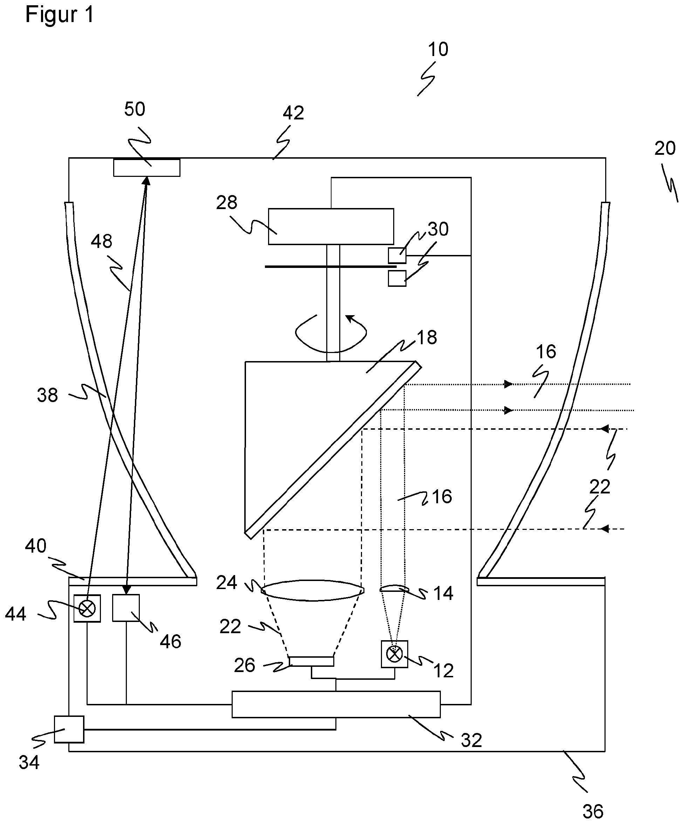

Fig. 1 zeigt eine schematische Schnittdarstellung durch einen Laserscanner 10, der insbesondere als Sicherheitslaserscanner ausgebildet ist. Der Unterschied zwischen einem normgerecht ausgebildeten Sicherheitslaserscanner und einem einfachen Laserscanner wurde einleitend erläutert.

Ein Lichtsender 12, etwa ein Laser in Form eines Kantenemitters oder eines VCSELs, sendet ein Lichtsignal aus, das periodisch amplitudenmoduliert ist oder vorzugsweise mindestens einen kurzen Lichtpuls aufweist. Das Sendelicht wird von einer Sendeoptik 14 zu einem ausgesandten Lichtstrahl 16 kollimiert, der über eine bewegliche Ablenkeinheit 18 in einen Überwachungsbereich 20 gelenkt und dort von einem gegebenenfalls vorhandenen Objekt remittiert oder reflektiert wird. Ein Teil dieses Lichts kehrt als einfallender remittierter Lichtstrahl 22 zu dem Laserscanner 10 zurück und wird von der Ablenkeinheit 18 zu einer Empfangsoptik 24 umgelenkt und von dort auf einen Lichtempfänger 26 gebündelt, beispielsweise eine Photodiode oder APD (Avalanche Photo Diode). Der Laserscanner 10 gemäß Figur 1 hat eine biaxiale Anordnung, in welcher der ausgesandte Lichtstrahl 16 neben dem einfallenden remittierten Lichtstrahl 22 verläuft. Das ist eine bevorzugte Ausführungsform der Erfindung, aber zunächst nur beispielhaft zu verstehen.

Die Ablenkeinheit 18 kann als Schwingspiegel ausgestaltet sein, ist aber in der Regel ein Drehspiegel, der durch Antrieb eines Motors 28 kontinuierlich rotiert. Alternativ ist kein Drehspiegel vorgesehen, sondern die Ablenkeinheit 18 ist als rotierender Messkopf samt Lichtsender 12 und Lichtempfänger 26 ausgestaltet. Die jeweilige Winkelstellung der Ablenkeinheit 18 wird über einen Encoder 30 erfasst. Der von dem Lichtsender 12 erzeugte Lichtstrahl 16 überstreicht somit den durch die Bewegung erzeugten Überwachungsbereich 20. Wird von dem Lichtempfänger 26 ein remittierter Lichtstrahl 22 aus dem Überwachungsbereich 20 empfangen, so kann aus der Winkelstellung der Ablenkeinheit 18 mittels des Encoders 30 auf die Winkellage des Objektes in dem Überwachungsbereich 20 geschlossen werden.

Zusätzlich wird die Lichtlaufzeit von Aussenden des Lichtstrahls 16 bis zu dem Empfang des remittierten Lichtstrahls 22 nach Reflexion an dem Objekt in dem Überwachungsbereich 20 ermittelt. Dazu sind alle Lichtlaufzeitverfahren denkbar. Aus der Lichtlaufzeit wird unter Verwendung der Lichtgeschwindigkeit auf die Entfernung des Objektes von dem Laserscanner 10 geschlossen. Diese Auswertung erfolgt in einer Auswertungseinheit 32, die dafür mit dem Lichtsender 12, dem Lichtempfänger 26, dem Motor 28 und dem Encoder 30 verbunden ist.

Über den Winkel und die Entfernung stehen dann zweidimensionale Polarkoordinaten aller Objekte in dem Überwachungsbereich 20 zur Verfügung. In dem Überwachungsbereich 20 können somit zweidimensionale Schutzfelder definiert werden, in die unzulässige Objekte wie Bedienpersonen oder deren Körperteile nicht eingreifen dürfen. Erkennt die Auswertungseinheit 32 einen unzulässigen Schutzfeldeingriff, so wird über einen sicheren Ausgang 34 (OSSD, Output Signal Switching Device) ein sicherheitsgerichtetes Abschaltsignal ausgegeben, um beispielsweise eine überwachte gefährliche Maschine anzuhalten oder in eine ungefährliche Position zu verbringen. Alternativ werden über den Ausgang 34 Messdaten ausgegeben, vor allem wenn der Laserscanner 10 kein Sicherheitslaserscanner ist und dementsprechend keine Schutzfelder überwacht.

Alle genannten Funktionskomponenten sind in einem Gehäuse 36 angeordnet, das im Bereich des Lichtaus- und Lichteintritts eine umlaufende Frontscheibe 38 aufweist. Die Frontscheibe 38 ist häufig, aber nicht zwingend als Rotationskörper ausgebildet und muss sich auch in beiden Fällen nicht unbedingt über 360° erstrecken, so dass dann ein gewisser Winkelbereich als Totzone verbleibt. Die Frontscheibe 38 weist im Schnitt eine Kontur auf, die im Beispiel der Figur 1 kelchartig gekrümmt ist. Eine andere Krümmung und sogar eine gerade Kontur sind aber auch denkbar, was dann insgesamt zu der Form eines Kegelstumpfes führt. Im unteren Bereich wird die Frontscheibe 38 durch einen Sockel 40, im oberen Bereich durch einen Haubendeckel 42 abgeschlossen.

Um die Frontscheibe 38 auf Lichtdurchlässigkeit zu überwachen, sind über den Umfang verteilt mehrere Testkanäle vorgesehen, von denen in der Schnittdarstellung nur ein Testkanal zu erkennen ist. Ein Testlichtsender 44 und ein Testlichtempfänger 46 sind bezüglich der Frontscheibe 38 außen angeordnet, können aber dennoch im Sockel 40 innerhalb des Laserscanners 10 untergebracht sein. Das Testlicht 48 des Testlichtsenders 44 tritt zunächst durch den Sockel 40 ins Freie und durchstrahlt dann die Frontscheibe 38 ins Innere des Laserscanners 10. Dort wird es an einem Testlichtreflektor 50 reflektiert, der an dem Haubendeckel 42 angebracht ist, und kehrt unter erneutem Durchstrahlen von Frontscheibe 38 und Sockel 40 zu dem Testlichtempfänger 46 zurück. In einer alternativen Ausführungsform sind die Testkanäle nicht wie dargestellt nach dem Prinzip einer Reflexionslichtschranke, sondern wie eine Einweglichtschranke aufgebaut, wo dann der Testlichtempfänger 46 innen an der Position des Testlichtreflektors 50 angebracht ist und der Testlichtreflektor 50 entfällt.

Anhand des Testsignals des Testlichtempfängers 46 kann die Auswertungseinheit 32 beispielsweise durch Vergleich mit einem Sollpegel prüfen, ob die Frontscheibe 38 an den Durchstoßpunkten des Testlichts 48 in ihrer Lichtdurchlässigkeit beeinträchtigt ist. Bei Erkennung einer Beeinträchtigung, welche die sichere Funktion des Laserscanners 10 nicht mehr gewährleistet, wird eine sicherheitsgerichtete Reaktion ausgelöst.

Die in Figur 1 dargestellten Testkanäle dienen vornehmlich der Erkennung einer homogenen Verschmutzung. Um lokale Verunreinigungen oder Manipulationen zu erkennen, die in der Praxis durch Prüfflecken mit einem spezifizierten Remissionsvermögen von beispielsweise 20 % repräsentiert werden, ist erfindungsgemäß eine auf dem ausgesandten Lichtstrahl 16 basierende Frontscheibenüberwachung vorgesehen, die nun erläutert wird. Beides wird vorteilhafterweise miteinander kombiniert, um die Anzahl erforderlicher Testkanäle zu reduzieren. Unter Umständen kann auf die Testkanäle ganz verzichtet werden.

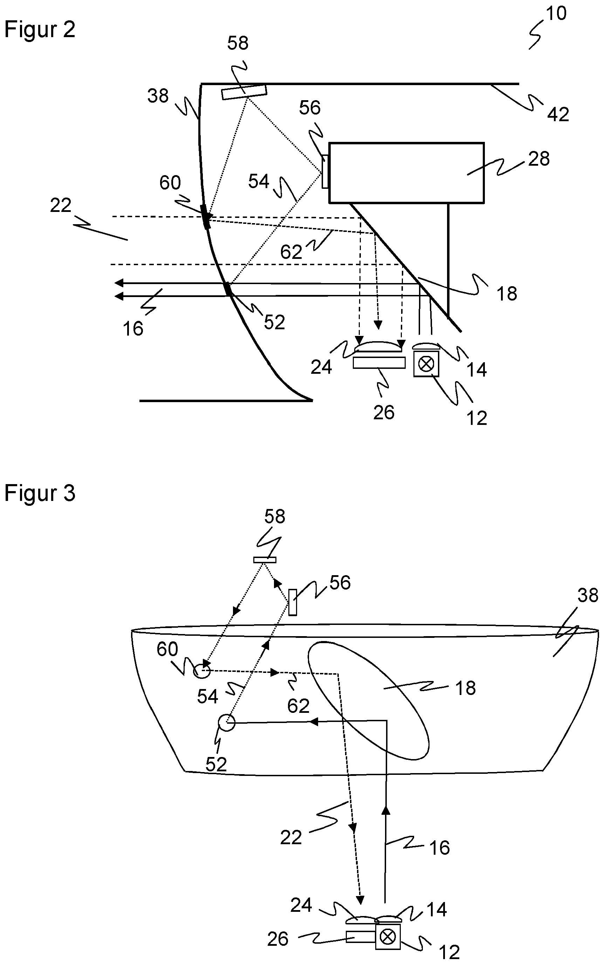

Figur 2 zeigt eine Teilansicht einer Schnittdarstellung eines Laserscanners 10, um das Funktionsprinzip der Prüf- und Manipulationsdetektion der Frontscheibe 38 durch Strahlumlenkung zu erläutern. Die Frontscheibenüberwachung basiert auf dem Frontscheibenreflex des ausgesandten Lichtstrahls 16 in einem ersten Bereich 52 der Frontscheibe 38, wo der ausgesandte Lichtstrahl 16 den Laserscanner 10 verlässt. Der dort reflektierte Anteil des ausgesandten Lichtstrahls 16 wird als Frontscheibenreflexstrahl 54 bezeichnet und innerhalb des Laserscanners 10 an einem ersten Lichtumlenkelement 56 und einem zweiten Lichtumlenkelement 58 umgelenkt, um erneut in einem weiteren Bereich 60 auf die Frontscheibe 38 zu treffen. Die beiden Lichtumlenkelemente 56, 58 sind hier als Spiegel ausgebildet und am Motorhalter des Motors 28 beziehungsweise am Haubendeckel 42 angebracht. Alternativ wären auch andere Formen der Lichtumlenkung beispielsweise über Prismen, andere Anbringungsorte und eine andere Anzahl von Lichtumlenkungen denkbar. Anstelle von eigenen Lichtumlenkelementen 56, 58 können auch entsprechend spiegelnde oder glänzende Oberflächen verwendet werden, beispielsweise erste Lichtumlenkelement 56 die schwarz glänzende Oberfläche des Motorhalters sein.

Der weitere Bereich 60 liegt im Strahlengang des remittierten Lichtstrahls 22, denn dort ist eine Verschmutzung oder sonstige Beeinträchtigung der Frontscheibe 38 für die Funktionsfähigkeit des Laserscanners 10 relevant. Der Frontscheibenreflexstrahl 54 wird in dem weiteren Bereich 60 ein weiteres Mal reflektiert, und der entstehende zweifach reflektierte Frontscheibenreflexstrahl 62 fällt auf den Lichtempfänger 26. Damit ist diese Frontscheibenüberwachung in das eigentliche Messsystem zur Bestimmung von Abständen zu Objekten in dem Überwachungsbereich 20 integriert, dafür werden keine zusätzlichen aktiven Bauelemente benötigt.

Da diese Frontscheibenüberwachung auf Reflexion und nicht Transmission beruht und sich damit beispielsweise dunkle Stäube nur schlecht erkennen lassen, wird sie vorzugsweise je nach zu erreichender Sicherheitskategorie mit Testkanälen gemäß Figur 1 kombiniert. Die Messung über den zweifach reflektierten Frontscheibenreflexstrahl 62 trägt dann die Erkennung lokaler Beeinträchtigungen bei, während die Testkanäle insbesondere für eine homogene Verunreinigung mit dunkeln Stäuben verantwortlich sind. Für die Prüfflecken, die gemäß der hier stellvertretend genannten Sicherheitsnorm IEC/EN 61496-3 eine lokale Verschmutzung oder Manipulation simulieren sollen, wird ein Remissionsvermögen von 20% gefordert, das für eine verlässliche Detektion mittels Strahlumlenkung nach Figur 2 ausreicht. Die Erkennung einer homogenen Verunreinigung andererseits erfolgt durch stichprobenartige Erfassung in relativ großen Winkelsegmenten von beispielsweise 45°, und deshalb die Zahl der Testkanäle gegenüber einer allein auf diesen Testkanälen beruhenden herkömmlichen Frontscheibenüberwachung deutlich reduziert. Figur 3 zeigt die Strahlumlenkungen ergänzend in einer entsprechenden schematischen dreidimensionalen Ansicht der Frontscheibe 38.

Die Detektionsempfindlichkeit der Frontscheibenüberwachung ist so einzustellen, dass einerseits die genannten Prüfflecken mit vorgegebenem Remissionsvermögen sicher detektiert werden und andererseits nicht zu sensibel auf Beeinträchtigungen reagiert wird. Letzteres wäre zwar kein Sicherheitsproblem, aber der Laserscanner 10 würde zu häufig einen Funktionsausfall unterstellen, der tatsächlich noch gar nicht droht, und damit wäre die Verfügbarkeit unnötig verringert. Deshalb kann es sinnvoll sein, den Frontscheibenreflexstrahl 54 bei den Lichtumlenkungen abzuschwächen, etwa indem mindestens einer der Lichtumlenkelemente 56, 58 geschwärzt oder maskiert wird oder entsprechende dämpfende Materialien gewählt werden. In einigen Ausführungsformen genügt es, wenn zumindest eines der Lichtumlenkelemente 56, 58 von einer dunkel glänzenden Oberfläche des Motorhalters oder Motors 28 beziehungsweise Haubendeckels 42 gebildet ist.

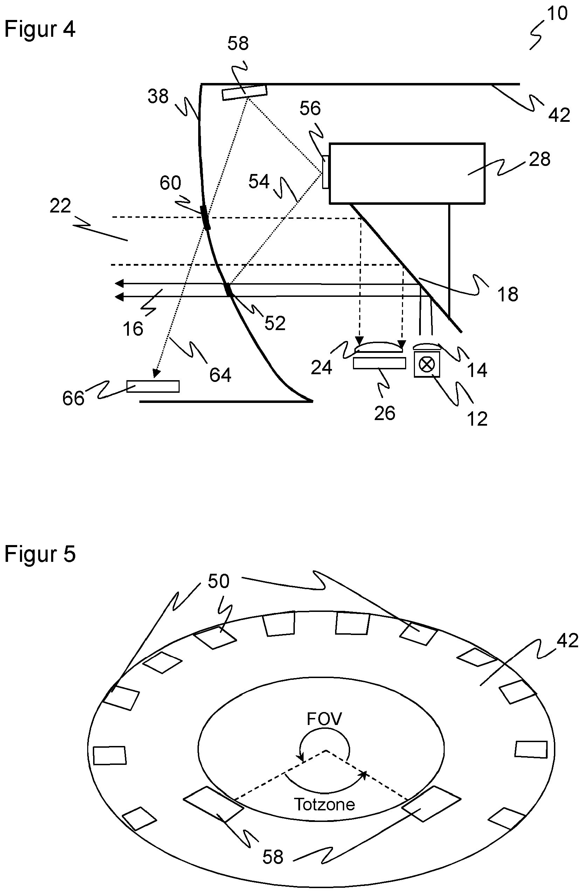

Figur 4 zeigt in einer Ansicht ähnlich Figur 2 anstelle des zweifach reflektierten Frontscheibenreflexstrahls 62 den dazu komplementären in dem weiteren Bereich 60 transmittierten Frontscheibenreflexstrahl 64. Dieser kann einfach auf dem Sockel des Gehäuses 36 absorbiert werden, um keine Messung zu stören. In Figur 4 ist stattdessen am Sockel ein zusätzlicher Lichtempfänger 66 vorgesehen. Damit lässt sich die Frontscheibe 38 mit dem Frontscheibenreflexstrahl 54 im weiteren Bereich 60 zusätzlich oder alternativ transmissiv auf Beeinträchtigungen prüfen. So werden dunkle Verschmutzungen auch auf Basis des Frontscheibenreflexstrahls 54 erkannt und herkömmliche Testkanäle weiter reduziert oder ganz ersetzt. Der zusätzliche Lichtempfänger 66 kann überdies genutzt werden, um die Ausgangsleistung des Lichtsenders 12 zu überwachen oder gar eine Lichtlaufzeit zu messen, somit eine Referenzzielfunktion erfüllen.

Figur 5 ist eine Ansicht auf die Unterseite des Haubendeckels 42. In dieser Ausführungsform überwacht der Laserscanner 10 nur einen Scan- oder Sichtbereich (FOV, Field of View) von beispielsweise 270° der vollständigen 360°-Umgebung in der Ebene des ausgesandten Lichtstrahls 16. Der restliche Winkelbereich, hier zwischen 270° und 360°, wird als Totzone bezeichnet, da hier keine Objekte in dem Überwachungsbereich 20 erfasst werden. Der Sichtbereich (FOV, Field of View) kann in anderen Ausführungsformen kleiner oder größer bis zu 360° sein.

Über den Sichtbereich verteilt sind Testlichtreflektoren 50 angeordnet, die zu entsprechenden Testkanälen zu einem herkömmlichen Teil der Frontscheibenüberwachung gehören. Im als Randbereich bezeichneten Übergangsbereich zwischen Sichtbereich und Totzone sind jeweils zweite Lichtumlenkelemente 58 für die Umlenkung des Frontscheibenreflexstrahls 54 vorgesehen.

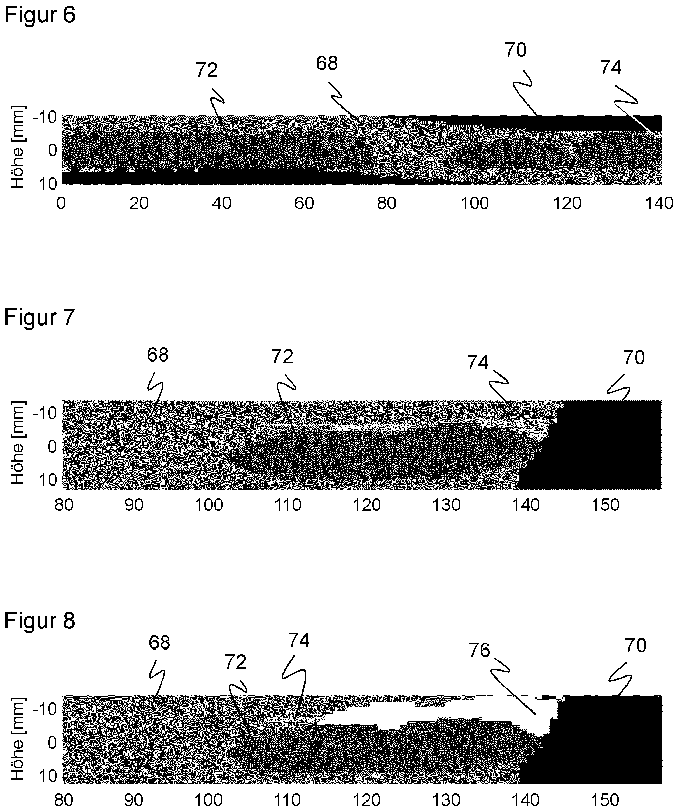

Die auf dem Frontscheibenreflexstrahl 54 basierende Frontscheibenüberwachung ist also in dieser Ausführungsform auf Teilbereiche des Sichtbereichs beschränkt, hier die Randbereiche. In diesem Bereich müssten sonst besonders viele herkömmliche Testkanäle angeordnet sein, wie im Anschluss unter Bezugnahme auf die Figuren 6 bis 8 noch erläutert. Durch die zusätzliche Frontscheibenüberwachung mit dem Frontscheibenreflexstrahl 54 genügt ein relativ grobes Netz von Testkanälen, um damit homogene dunkle Verunreinigungen zu erkennen.

Auf den ersten Blick erscheint es erforderlich, die zweiten Lichtumlenkelemente 58 zwar im Randbereich, aber noch innerhalb des Sichtbereichs anzuordnen. Tatsächlich haben jedoch die Prüfflecken oder anzunehmenden lokalen Beeinträchtigungen eine gewisse Winkelausdehnung. Das ermöglicht, die Lichtumlenkelemente 58 teilweise wie in Figur 5 oder sogar vollständig zumindest einige Grad in die Totzone zu verschieben, wo sie dann gleichsam rück- oder vorauswirkend den Randbereich der Frontscheibe 38 im Sichtbereich prüfen. Beispielsweise erfolgt die Frontscheibenüberwachung bei einem Sichtfeld von 0°-270° erst bei 272,5° oder 275° beziehungsweise schon bei 355° oder 357,5°. Da die Totzone in der Regel konstruktive Gründe hat, dürfen die Lichtwege für die Frontscheibenüberwachung natürlich trotzdem bei den genannten Winkeln noch zumindest weitgehend ungestört sein.

Der Vorteil eine Frontscheibenüberwachung aus der Totzone heraus ist die Entkopplung zur Hauptmessung. Das ermöglicht auch, die Empfindlichkeit des Hauptmesssystems auf die Bedürfnisse der Frontscheibenüberwachung umzustellen. Beispielsweise wird innerhalb der Totzone die Detektionsschwelle und damit die Empfindlichkeit der Strahlumlenkung gegenüber einer verschmutzten Frontscheibe 38 individuell per Software eingestellt. Innerhalb des Sichtbereichs ist die Detektionsschwelle nicht frei veränderbar, da die Lichtlaufzeitmessung und sichere Objekterfassung die Parametrierung vorgibt.

Die Figuren 6 bis 8 zeigen jeweils in einer Graucodierung verschiedene Bereiche einer aufgerollt dargestellten Frontscheibe 38, wobei in X-Richtung der Umlauf- oder Scanwinkel und in Y-Richtung die Höhe dargestellt ist. Figur 6 zeigt die vollständige Frontscheibe 38 im Falle einer Frontscheibenüberwachung allein mit Testkanälen 44, 46, 50. Dabei lässt sich der vollständige Sichtbereich von in diesem Beispiel 280° wegen der Symmetrien durch Spiegelung an der Y-Achse ergänzen. Figur 7 ist eine Ausschnittvergrößerung des Winkelbereichs um 140°, wo der Sichtbereich in den Totbereich übergeht. Figur 8 zeigt die Situation der Figur 7, wenn die Testkanäle 44, 46, 50 in diesem Übergangsbereich bei 140° komplementär um die auf dem Frontscheibenreflexstrahl 54 basierende Frontscheibenüberwachung ergänzt wird.

In einem mittelgrauen Bereich 68 wird ein Prüffleck direkt über den ausgesandten Lichtstrahl 16 detektiert. In den schwarzen Bereichen 70 wird der Prüffleck nicht detektiert, aber das ist auch irrelevant, da dies kein Durchtrittsbereich des remittierten Lichtstrahls 22 ist. Die dunkelgrauen Bereiche Z 72 sind durch die Testkanäle 44, 46, 50 abgedeckt.

Es verbleiben jedoch helle Bereiche 74, in denen der Prüffleck unbemerkt bleibt. Diese Lücke könnte durch zusätzliche Testkanäle 44, 46, 60 geschlossen werden, aber das erfordert entsprechenden Aufwand für ein dichtes Netz aus Testkanälen 44, 46, 60. Zum Verständnis ist noch zu ergänzen, dass der mittelgraue Bereich 68 über die verschiedenen Scanwinkeln deshalb so etwas wie eine Schwingung in Höhenrichtung vollzieht, weil der Laserscanner 10 biaxial aufgebaut ist. Dadurch drehen sich ausgesandter Lichtstrahl 16 und remittierter Lichtstrahl 22 über eine Umdrehung der Ablenkeinheit 18 einmal umeinander, wie man sich durch Betrachtung der zueinander um 180° versetzten Ablenkungen in Figur 1 und 2 leicht klarmachen kann. Dieses Verhalten eines biaxialen Laserscanners 10 erschwert die Frontscheibenüberwachung.

Wie in Figur 8 zu erkennen, verdrängt ein weißer Bereich 76, in dem die ergänzte Frontscheibenüberwachung mit dem Frontscheibenreflexstrahl 54 den Prüffleck erfasst, fast vollständig den hellen Bereich 74, in dem zuvor der Prüffleck unbemerkt bliebt. Der verbleibende Rest ist irrelevant, weil hierdurch nur ein sehr kleiner Anteil des remittierten Lichtstrahls 22 verdeckt wird, der keinen Detektionsverlust des Laserscanners 10 verursacht.

Die Beschränkung der Frontscheibenüberwachung mit dem Frontscheibenreflexstrahl 54 auf den Randbereich ist nur ein Beispiel, es können alternativ mehr Bereiche, größere Bereiche oder auch der gesamte Sichtbereich umfasst sein. Dann würde der weiße Bereich 76 in Figur 8 sich entsprechend vergrößern, und auf diesem Weg können weitere oder sogar alle Testkanäle 44, 46, 50 ersetzt werden.

In einer nicht dargestellten vorteilhaften Ausführungsform des Laserscanners 10 werden die Lichtumlenkelemente 56, 58 als eine Art Gitterstruktur ausgebildet, in denen umlenkende und absorbierende Bereiche einander abwechseln, also Lichtfallen. Dadurch kann eine Art Differenzmessung durchgeführt werden, um die Überlagerung der Frontscheibenüberwachung mit einem Objekt im Nahbereich des Überwachungsbereichs 20 zu berücksichtigen. Ohne ein solches Differenzverfahren können sehr nahe Objekte und eine beeinträchtigte Frontscheibe 38 nicht gut voneinander getrennt werden. Durch den Vergleich der Empfangssignale mit absorbiertem und reflektiertem Frontscheibenreflexstrahl 54 wird dies verbessert und damit die Verfügbarkeit bei sehr kurzen Schutzfeldern mit Objekten nahe des Schutzfeldes erhöht.

Bisher wurde ein Laserscanner 10 mit einem ausgesandten Lichtstrahl 16 und somit einer Überwachungsebene beschrieben. Die erfindungsgemäße Frontscheibenüberwachung lässt sich auch bei einem Mehrlagenscanner einsetzen. Das ist ein Laserscanner, der mehrere Abtaststrahlen in Elevation übereinander aufweist und somit einen Raumbereich durch mehreren Ebenen überwacht, oder genauer mit einer Struktur ähnlich geschachtelten Sanduhren. Die mehreren Abtaststrahlen entstehen durch mehrere Lichtsender oder Strahlteilungen und werden dementsprechend in mehreren Lichtempfängern oder einem Lichtempfänger mit mehreren Empfangszonen oder Pixeln empfangen.

Da ein Mehrlagenscanner ein Objekt in seinen mehreren Ebenen erfasst, ist es statistisch unwahrscheinlicher, dass es zu einem Detektionsverlust aufgrund von lokalen oder. homogenen Verschmutzungen kommt. Deshalb kann auf noch mehr herkömmliche Testkanäle verzichtet werden oder die Frontscheibenüberwachung allein auf einem umgelenkten Frontscheibenreflex beruhen. Weiterhin genügt es, die Frontscheibe nur mit einem Teil der mehreren Abtaststrahlen zu prüfen. Ein weiterer Vorteil dieser Art der Frontscheibenüberwachung ist, dass sie sich mit relativ geringem Aufwand in einem bestehenden Mehrlagenscanner ergänzen lässt.

## Patentansprüche

1. Sicherheitslaserscanner (10) zur Erfassung von Objekten in einem Überwachungsbereich (20), der einen Lichtsender (12) zum Aussenden eines Abtaststrahls (16), eine bewegliche Ablenkeinheit (18) zur periodischen Abtastung des Überwachungsbereichs (20) mit dem Abtaststrahl (16), einen Lichtempfänger (26) zum Erzeugen eines Empfangssignals aus dem von den Objekten remittierten Abtaststrahl (22), eine Frontscheibe (38) sowie eine Steuer- und Auswertungseinheit (32) aufweist, die dafür ausgebildet ist, aus dem Empfangssignal Informationen über die Objekte in dem Überwachungsbereich (20) zu gewinnen sowie in einer Frontscheibenüberwachung eine beeinträchtigte Lichtdurchlässigkeit der Frontscheibe (38) durch Bewertung eines Frontscheibenreflexstrahls (54) zu erkennen, der aus dem Abtaststrahl (16) durch Reflexion an der Frontscheibe (38) erzeugt ist,
**gekennzeichnet durch**
mindestens ein Lichtumlenkelement (56, 58) im Strahlengang des Frontscheibenreflexstrahls (54), das den Frontscheibenreflexstrahl (54) nochmals zu der Frontscheibe (38) in einem zu testenden Bereich (60) im Strahlengang des remittierten Abtaststrahls (22) führt, so dass durch Reflexion an dem zu testenden Bereich (60) ein zweifach reflektierter Frontscheibenreflexstrahl (62) entsteht und dass die Steuer- und Auswertungseinheit (32) dafür ausgebildet ist, für die Frontscheibenüberwachung das von dem zweifach reflektierten Frontscheibenreflexstrahl (62) in dem Lichtempfänger (26) erzeugte Empfangssignal auszuwerten.

2. Sicherheitslaserscanner (10) nach Anspruch 1,
der mindestens einen externen Zusatzlichtempfänger (66) aufweist, auf den ein den zu testenden Bereich (60) transmittierende Anteil (64) des Frontscheibenreflexstrahls (54) fällt, und wobei die Steuer- und Auswertungseinheit (32) dafür ausgebildet ist, für die Frontscheibenüberwachung das Empfangssignal des Zusatzlichtempfängers (66) auszuwerten.

3. Sicherheitslaserscanner (10) nach einem der vorhergehenden Ansprüche, wobei Lichtsender (12) und Lichtempfänger (26) in einem biaxialen Aufbau nebeneinander mit zueinander parallelen optischen Achsen angeordnet sind.

4. Sicherheitslaserscanner (10) nach einem der vorhergehenden Ansprüche, der zur zusätzlichen Frontscheibenüberwachung zumindest ein Paar Testlichtsender (44) und Testlichtempfänger (46) aufweist, die nach Art einer Einweglichtschranke oder Reflexionslichtschranke angeordnet sind, um einen Teilbereich der Frontscheibe (38) mit einer Transmissionsmessung auf Lichtdurchlässigkeit zu prüfen.

5. Sicherheitslaserscanner (10) nach einem der vorhergehenden Ansprüche, wobei das Lichtumlenkelement (56, 58) nur in mindestens einem Teilbereich eines Sichtfeldes des Sicherheitslaserscanners (10) vorgesehen ist, so dass die auf dem Frontscheibenreflexstrahl (54) basierende Frontscheibenüberwachung nur den Teilbereich betrifft.

6. Sicherheitslaserscanner (10) nach Anspruch 5,
wobei der Teilbereich ein Randbereich zwischen Sichtfeld und einem Totbereich jenseits des Sichtfeldes ist, wobei das Lichtumlenkelement (56, 58) insbesondere in dem Totbereich vorgesehen ist.

7. Sicherheitslaserscanner (10) nach Anspruch 6,
wobei die Steuer- und Auswertungseinheit (32) dafür ausgebildet ist, die Empfindlichkeit der Erfassung des zweifach reflektierten Frontscheibenreflexstrahls (62) in dem Lichtempfänger (26) und/oder die Auswertung des dadurch erzeugten Empfangssignals im Randbereich anzupassen.

8. Sicherheitslaserscanner (10) nach einem der vorhergehenden Ansprüche, wobei die Frontscheibe (38) die Form eines Rotationskörpers und im Schnitt eine gekrümmte Kontur aufweist, insbesondere eine kelchförmig gekrümmte Kontur.

9. Sicherheitslaserscanner (10) nach einem der vorhergehenden Ansprüche, der ein erstes und ein zweites Lichtumlenkelement (56, 58) im Strahlengang des Frontscheibenreflexstrahls (54) aufweist, wobei insbesondere das erste Lichtumlenkelement (56) an einem mittig angeordneten Motorhalter und das zweite Lichtumlenkelement (58) an einem Deckel (42) des Sicherheitslaserscanners (10) angeordnet ist.

10. Sicherheitslaserscanner (10) nach einem der vorhergehenden Ansprüche, wobei das Lichtumlenkelement (56, 58) strahlabschwächend ausgebildet ist und/oder wobei im Strahlengang des Frontscheibenreflexstrahls (54) ein Referenzlichtempfänger angeordnet ist, insbesondere an einem Lichtumlenkelement (56, 58).

11. Sicherheitslaserscanner (10) nach einem der vorhergehenden Ansprüche, wobei in Umlaufrichtung der Bewegung der Ablenkeinheit (18) teilweise ein Lichtumlenkelement (56, 58) und teilweise eine Lichtfalle angeordnet ist, um durch Vergleich der Empfangssignale eine differentielle Frontscheibenüberwachung zu ermöglichen.

12. Sicherheitslaserscanner (10) nach einem der vorhergehenden Ansprüche, der als Mehrlagenscanner mit mehreren in Elevation separierten Abtaststrahlen ausgebildet ist, wobei mindestens einer der Abtaststrahlen für die Frontscheibenüberwachung verwendet ist.

13. Sicherheitslaserscanner (10) nach einem der vorhergehenden Ansprüche, der einen sicheren Ausgang (34) aufweist und dessen Steuer- und Auswertungseinheit (32) dafür ausgebildet ist, die Position erfasster Objekte mit Schutzfeldern zu vergleichen und bei Erkennung eines unzulässigen Schutzfeldeingriffs den sicheren Ausgang (34) mit einem Absicherungssignal anzusteuern.

14. Verfahren zur Frontscheibenüberwachung einer Frontscheibe (38) eines Sicherheitslaserscanners (10), insbesondere eines Sicherheitslaserscanners (10) nach einem der vorhergehenden Ansprüche, wobei ein Abtaststrahl (16) ausgesandt, mit dem Abtaststrahl (16) der Überwachungsbereich (20) periodisch abgetastet, aus dem von Objekten in dem Überwachungsbereich (20) remittierten Abtaststrahl (22) in einem Lichtempfänger (26) ein Empfangssignal erzeugt und dieses ausgewertet wird, um Informationen über die Objekte zu gewinnen sowie für die Frontscheibenüberwachung eine beeinträchtigte Lichtdurchlässigkeit der Frontscheibe (38) durch Bewertung eines Frontscheibenreflexstrahls zu erkennen, der aus dem Abtaststrahl durch Reflexion an der Frontscheibe (38) erzeugt wird,
**dadurch gekennzeichnet,**
**dass** der Frontscheibenreflexstrahl (54) durch mindestens ein Lichtumlenkelement (56, 58) in dessen Strahlengang nochmals zu der Frontscheibe (38) in einem zu testenden Bereich (60) im Strahlengang des remittierten Abtaststrahls (22) geführt wird, so dass durch Reflexion an dem zu testenden Bereich (60) ein zweifach reflektierter Frontscheibenreflexstrahl (62) entsteht, und dass der zweifach reflektierte Frontscheibenreflexstrahl (62) auf den Lichtempfänger (26) fällt und das dabei erzeugte Empfangssignal ausgewertet wird.

## Claims

1. A safety laser scanner (10) for detecting objects in a monitoring area (20), comprising a light transmitter (12) for transmitting a scanning beam (16), a movable deflection unit (18) for periodically scanning the monitoring area (20) with the scanning beam (16), a light receiver (26) for generating a received signal from the remitted scanning beam (22) remitted by the objects, a front window (38), and a control and evaluation unit (32) configured to obtain information about the objects in the monitoring region (20) from the received signal and, in a front window monitoring, to detect impaired light transmission of the front window (38) by evaluating a front window reflection beam (54) which is generated from the scanning beam (16) by reflection at the front window (38), **characterized in that** the safety laser scanner (10) comprises at least one light deflecting element (56, 58) in the beam path of the front window reflection beam (54) that again guides the front window reflection beam (54) to the front window (38) in a region (60) to be tested in the beam path of the remitted scanning beam (22) so that a twice-reflected front window reflection beam (62) is generated by reflection at the region (60) to be tested, and **in that** the control and evaluation unit (32) is configured to evaluate the received signal generated by the twice-reflected front window reflection beam (62) in the light receiver (26) for the front window monitoring.

2. The safety laser scanner (10) according to claim 1,
that comprises at least one external auxiliary light receiver (66) where a portion (64) of the front window reflection beam (54) transmitting the region (60) to be tested is incident, and wherein the control and evaluation unit (32) is configured to evaluate the received signal of the auxiliary light receiver (66) for the front window monitoring.

3. The safety laser scanner (10) according to any of the preceding claims,
wherein light transmitter (12) and light receiver (26) are arranged in a biaxial configuration side by side with optical axes parallel to each other.

4. The safety laser scanner (10) according to any of the preceding claims, comprising at least a pair of a test light transmitter (44) and a test light receiver (46) arranged in the manner of a through-beam or reflective light barrier for additional front window monitoring to test a partial area of the front window (38) for light transmittance with a transmission measurement.

5. The safety laser scanner (10) according to any of the preceding claims, wherein the light deflecting element (56, 58) is provided only in at least a partial area of a field of view of the safety laser scanner (10), so that the front window monitoring based on the front window reflection beam (54) is only applied to said partial area.

6. The safety laser scanner (10) according to claim 5,
wherein the partial area is a border area between the field of view and a dead zone beyond the field of view, wherein in particular the light deflecting element (56, 58) is provided in the dead zone.

7. The safety laser scanner (10) according to claim 6,
wherein the control and evaluation unit (32) is configured to adjust the sensitivity of the detection of the twice-reflected front window reflection beam (62) in the light receiver (26) and/or the evaluation of the received signal generated in the border area.

8. The safety laser scanner (10) according to any of the preceding claims, wherein the front window (38) has the shape of a body of revolution and a curved contour in section, in particular a cup-shaped curved contour.

9. The safety laser scanner (10) according to any of the preceding claims, comprising a first and a second light deflecting element (56, 58) in the beam path of the front window reflection beam (54), wherein in particular the first light deflecting element (56) is arranged on a centrally arranged motor holder and the second light deflecting element (58) is arranged on a cover (42) of the safety laser scanner (10).

10. The safety laser scanner (10) according to any of the preceding claims,
wherein the light deflecting element (56, 58) is configured to attenuate the beam and/or wherein a reference light receiver is arranged in the beam path of the front window reflection beam (54), in particular on a light deflecting element (56, 58).

11. The safety laser scanner (10) according to any of the preceding claims, wherein, in the circumferential direction of movement of the deflecting unit (18), in part a light deflecting element (56, 58) and in part a light trap are arranged in order to enable differential front window monitoring by comparison of the received signals.

12. The safety laser scanner (10) according to any of the preceding claims,
that is configured as a multi-layer scanner having a plurality of scanning beams separated in elevation, at least one of the scanning beams being used for front window monitoring.

13. The safety laser scanner (10) according to any of the preceding claims,
that comprises a safe output (34) and whose control and evaluation unit (32) is configured to compare the position of detected objects with protective fields and, if an impermissible protective field violation is detected, to provide a safeguarding signal at the safe output (34).

14. A method for front window monitoring of a front window (38) of a safety laser scanner (10), in particular of a safety laser scanner (10) according to any of the preceding claims, wherein a scanning beam (16) is transmitted, the monitoring area (20) is periodically scanned with the scanning beam (16), a received signal is generated in a light receiver (26) from the remitted scanning beam (22) remitted by objects in the monitoring area (20), and the received signal is evaluated in order to obtain information about the objects and, for front window monitoring, to detect impaired light transmission of the front window (38) by evaluating a front window reflection beam which is generated from the scanning beam by reflection at the front window (38),
**characterized in that** the front window reflection beam (54) is again guided by at least one light deflection element (56, 58) in its beam path to the front window (38) in a region (60) to be tested in the beam path of the remitted scanning beam (22), so that a twice-reflected front window reflection beam (62) is generated by reflection at the region (60) to be tested, and **in that** the twice-reflected front window reflection beam (62) is incident on the light receiver (26) and the reception signal thus generated is evaluated.

## Revendications

1. Scanner laser de sécurité (10) pour la détection d'objets dans une zone à surveiller (20), comprenant un émetteur de lumière (12) pour émettre un faisceau de balayage (16), une unité de déviation mobile (18) pour balayer périodiquement la zone à surveiller (20) avec le faisceau de balayage (16), un récepteur de lumière (26) pour générer un signal de réception à partir du faisceau de balayage (22) renvoyé par les objets, une vitre avant (38) et une unité de commande et d'évaluation (32) qui est réalisée pour obtenir des informations sur les objets dans la zone à surveiller (20) à partir du signal de réception et pour reconnaître, lors d'une surveillance de la vitre avant, une perturbation de la translucidité à travers la vitre avant (38) en évaluant un faisceau reflet de vitre avant (54) qui est généré à partir du faisceau de balayage (16) par réflexion sur la vitre avant (38),
**caractérisé par**
au moins un élément de renvoi de lumière (56, 58) dans le chemin optique du faisceau reflet de vitre avant (54), qui guide le faisceau reflet de vitre avant (54) à nouveau vers la vitre avant (38) dans une zone à tester (60) dans le chemin optique du faisceau de balayage renvoyé (22), de sorte qu'un faisceau reflet de vitre avant (62) réfléchi à deux reprises se produit par réflexion sur la zone à tester (60), et l'unité de commande et d'évaluation (32) est réalisée pour évaluer le signal de réception, généré par le faisceau reflet de vitre avant (62) réfléchi à deux reprises dans le récepteur de lumière (26), pour la surveillance de la vitre avant.

2. Scanner laser de sécurité (10) selon la revendication 1,
comprenant au moins un récepteur de lumière supplémentaire externe (66) sur lequel tombe une partie (64) du faisceau reflet de vitre avant (54), laquelle traverse la zone à tester (60), et l'unité de commande et d'évaluation (32) est réalisée pour évaluer le signal de réception du récepteur de lumière supplémentaire (66) pour la surveillance de la vitre avant.

3. Scanner laser de sécurité (10) selon l'une des revendications précédentes, dans lequel l'émetteur de lumière (12) et le récepteur de lumière (26) sont disposés l'un à côte de l'autre dans une structure bi-axiale avec des axes optiques parallèles l'un à l'autre.

4. Scanner laser de sécurité (10) selon l'une des revendications précédentes, comprenant, pour une surveillance supplémentaire de la vitre avant, au moins une paire d'émetteurs de lumière de test (44) et de récepteurs de lumière de test (46) disposés à la manière d'une barrière lumineuse unidirectionnelle ou d'une barrière lumineuse à réflexion pour contrôler la translucidité d'une zone partielle de la vitre avant (38) par une mesure de transmission.

5. Scanner laser de sécurité (10) selon l'une des revendications précédentes, dans lequel l'élément de renvoi de lumière (56, 58) est prévu uniquement dans au moins une zone partielle d'un champ de vision du scanner laser de sécurité (10), de sorte que la surveillance de la vitre avant basée sur le faisceau reflet de vitre avant (54) ne concerne que ladite zone partielle.

6. Scanner laser de sécurité (10) selon la revendication 5,
dans lequel la zone partielle est une zone de bord entre le champ de vision et une zone morte au-delà du champ de vision, l'élément de renvoi de lumière (56, 58) étant prévu en particulier dans la zone morte.

7. Scanner laser de sécurité (10) selon la revendication 6,
dans lequel l'unité de commande et d'évaluation (32) est réalisée pour adapter la sensibilité de la détection du faisceau reflet de vitre avant (62) réfléchi à deux reprises dans le récepteur de lumière (26) et/ou l'évaluation du signal de réception généré par celui-ci dans la zone de bord.

8. Scanner laser de sécurité (10) selon l'une des revendications précédentes, dans lequel la vitre avant (38) présente la forme d'un solide de révolution et, en coupe, un contour incurvé, en particulier un contour incurvé en forme de calice.

9. Scanner laser de sécurité (10) selon l'une des revendications précédentes, comprenant un premier et un deuxième élément de renvoi de lumière (56, 58) dans le chemin optique du faisceau reflet de vitre avant (54), en particulier le premier élément de renvoi de lumière (56) étant disposé sur un support de moteur disposé au centre et le deuxième élément de renvoi de lumière (58) étant disposé sur un couvercle (42) du scanner laser de sécurité (10).

10. Scanner laser de sécurité (10) selon l'une des revendications précédentes, dans lequel l'élément de renvoi de lumière (56, 58) est réalisé de manière à atténuer le faisceau, et/ou un récepteur de lumière de référence est disposé dans le chemin optique du faisceau reflet de vitre avant (54), en particulier sur un élément de renvoi de lumière (56, 58).

11. Scanner laser de sécurité (10) selon l'une des revendications précédentes, dans lequel un élément de renvoi de lumière (56, 58) et un piège à lumière sont disposés chacun en partie dans la direction de révolution du mouvement de l'unité de déviation (18), afin de permettre une surveillance différentielle de la vitre avant par comparaison des signaux de réception.

12. Scanner laser de sécurité (10) selon l'une des revendications précédentes, qui est réalisé sous forme de scanner multi-niveaux avec plusieurs faisceaux de balayage séparés en élévation, l'un au moins des faisceaux de balayage étant utilisé pour la surveillance de la vitre avant.

13. Scanner laser de sécurité (10) selon l'une des revendications précédentes, comprenant une sortie sécurisée (34) et son unité de commande et d'évaluation (32) étant réalisée pour comparer la position d'objets détectés avec des champs de protection et, si une intervention non autorisée dans le champ de protection est détectée, pour piloter la sortie sécurisée (34) avec un signal de sécurisation.

14. Procédé de surveillance d'une vitre avant (38) d'un scanner laser de sécurité (10), en particulier d'un scanner laser de sécurité (10) selon l'une des revendications précédentes, dans lequel un faisceau de balayage (16) est émis, la zone à surveiller (20) est balayée périodiquement avec le faisceau de balayage (16), un signal de réception est généré dans un récepteur de lumière (26) à partir du faisceau de balayage (22) renvoyé par des objets dans la zone à surveiller (20), et ce signal de réception est évalué pour obtenir des informations sur les objets et pour reconnaître, lors de la surveillance de la vitre avant, une perturbation de la translucidité de la vitre avant (38) en évaluant un faisceau reflet de vitre avant qui est généré à partir du faisceau de balayage par réflexion sur la vitre avant (38),
**caractérisé en ce que**
le faisceau reflet de vitre avant (54) est guidé par au moins un élément de renvoi de lumière (56, 58), dans son chemin optique, à nouveau vers la vitre avant (38) dans une zone à tester (60) dans le chemin optique du faisceau de balayage renvoyé (22), de sorte qu'un faisceau reflet de vitre avant (62) réfléchi à deux reprises se produit par réflexion sur la zone à tester (60), le faisceau reflet de vitre avant (62) réfléchi à deux reprises tombe sur le récepteur de lumière (26), et le signal de réception généré par celui-ci est évalué.
